# EUROPEAN PATENT APPLICATION

(11) **EP 4 177 752 A1**
(43) Date of publication of application: **10.05.2023**
(21) Application number: 21838803.1
(22) Date of filing: 06.07.2021
(51) Int. Cl.: G06F 9/50

(54) **TASK PROCESSING METHOD, EDGE COMPUTING DEVICE, COMPUTER DEVICE, AND MEDIUM**

(30) Priority: 08.07.2020 CN 202010652486
(71) Applicant: ZTE Corporation, Shenzhen, Guangdong 518057 (CN)
(72) Inventor: WANG, Hongling, Shenzhen, Guangdong 518057 (CN)
(74) Representative: Canzler & Bergmeier Patentanwälte Partnerschaft mbB
(86) International application number: PCT/CN2021/104686
(87) International publication number: WO 2022/007781

(57) **Abstract**

The present disclosure provides a task processing method, an edge computing device, a computer device, and a computer readable medium. The method comprises: receiving tasks sent by a network device; determining assignment types of the tasks, and dividing the tasks into task units according to the assignment types, and placing the task units into a task pool; determining issuing priorities of the task units in the task pool according to types of the task units in the task pool, the types of the task units being the assignment types of the tasks to which the task units belong; determining, according to the issuing priorities, a task unit to be processed; and if the current processing capacity of an edge computing device does not satisfy a first preset requirement, determining a first network element device, and sending to the first network element device the task unit to be processed. When hashrate resources of the edge computing device are insufficient, the first network element device is selected from a surrounding network element group to perform task transfer computing, so that the hashrate of the edge computing device is improved, and the task computing delay is reduced.

## Description

This application claims priority from Chinese patent application NO.202010652486.2 filed on July 8, 2020, the entirety of which is incorporated herein by reference.

### TECHNICAL FIELD

The present disclosure relates to the field of edge computing technologies, and in particular, to a task processing method, an edge computing device, a computer device, and a computer-readable medium.

### BACKGROUND

As an edge computing technology with operator features and deployed at the network-side edge, Multi-Access Edge Computing/Mobile Edge Computing (MEC) has gained more and more attention, and, especially due to the task computing capacity thereof, is widely considered as one of the two key service enabling technologies of 5G. With the continuous expansion of various operation and maintenance services, and in consideration of possible future development and changes of the operation and maintenance network, the requirements on real-time performance and intelligence are higher and higher, and it is desired that the computing power of the MEC can be improved to implement intelligent operation and maintenance of the MEC.

### SUMMARY

The present disclosure provides a task processing method, a network management system, an independent computing node, a computer device and a computer-readable medium.

In a first aspect, an embodiment of the present disclosure provides a task processing method, including: receiving a task sent from a network device; determining an assignment type of the task, dividing the task into task units according to the assignment type, and placing the task units into a task pool; determining, according to types of the task units in the task pool, issuing priorities of the task units in the task pool, wherein the type of each task unit is the assignment type of the task to which the task unit belongs; determining, according to the issuing priorities, a task unit to be processed; and determining a first network element device if a current processing capacity of an edge computing device does not meet a preset first requirement, and sending the task unit to be processed to the first network element device for processing.

In a second aspect, an embodiment of the present disclosure provides an edge computing device, including: a receiving module configured to receive a task sent from a network device; a first determination module configured to determine an assignment type of the task; a dividing module configured to divide the task into task units according to the assignment type, and place the task units into a task pool; a second determination module configured to determine, according to types of the task units in the task pool, issuing priorities of the task units in the task pool, wherein the type of each task unit is the assignment type of the task to which the task unit belongs; a third determination module configured to determine, according to the issuing priorities, a task unit to be processed; and a fourth determination module configured to determine a first network element device if a current processing capacity of an edge computing device does not meet a preset first requirement; and a sending module configured to send the task unit to be processed to the first network element device for processing.

In a third aspect, an embodiment of the present disclosure provides a computer device, including: one or more processors; a storage means having one or more programs stored thereon, wherein the one or more programs, when executed by the one or more processors, cause the one or more processors to implement the task processing method as described above.

In a fourth aspect, an embodiment of the present disclosure provides a computer-readable medium storing a computer program thereon, wherein the program, when executed, causes the task processing method as described above to be implemented.

### BRIEF DESCRIPTION OF DRAWINGS

FIG. 1 is a flowchart of a task processing method according to an embodiment of the present disclosure;
FIG. 2 is another flowchart of a task processing method according to an embodiment of the present disclosure;
FIG. 3 is another flowchart of a task processing method according to an embodiment of the present disclosure;
FIG. 4 is another flowchart of a task processing method according to an embodiment of the present disclosure;
FIG. 5 is another flowchart of a task processing method according to an embodiment of the present disclosure; and
FIG. 6 is a schematic structural diagram of an edge computing device according to an embodiment of the present disclosure.

### DETAIL DESCRIPTION OF EMBODIMENTS

To improve understanding of the technical solution of the present disclosure for those skilled in the art, the packet transmission method, the access gateway and the computer-readable medium according to the present disclosure will be described below in detail in conjunction with the accompanying drawings.

Example embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

In the related art, in the case of a short-distance edge cloud, although the short-distance edge cloud computing capacity of the MEC is used, the computing power of the MEC is still limited, especially in the case of some urgent tasks desired be solved in real time, making it impossible to process the tasks in time or involving high latency.

In addition, although the MEC can provide various resource or service scheduling optimization algorithms, the MEC is not an intelligent node and limited by hardware resources, making it difficult to support complex model training and model optimization.

The MEC is connected to a plurality of network element devices, and in order to increase the computing power of the MEC and process tasks in time or reduce the high latency, the present disclosure provides, based on the federated learning idea, a task processing method, an edge computing device, a computer device, and a computer-readable medium.

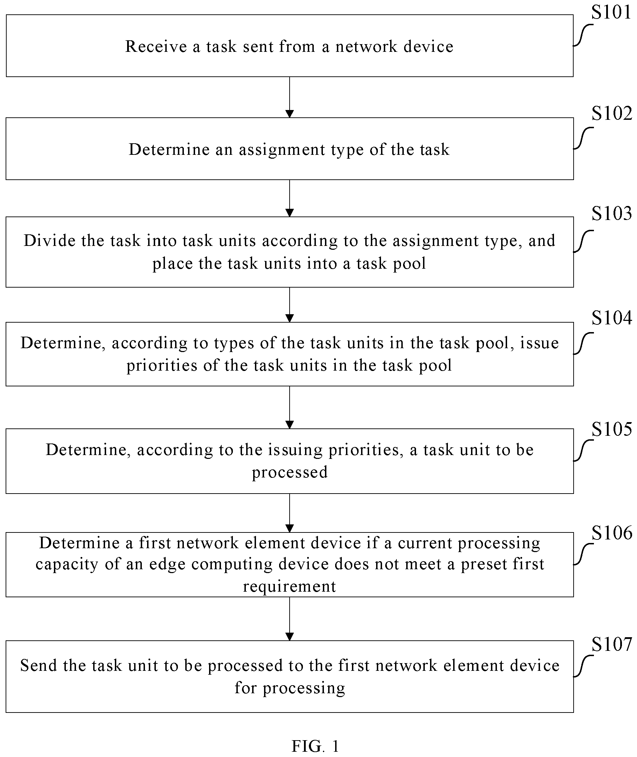

FIG. 1 shows a flowchart of a task processing method according to an embodiment of the present disclosure. The task processing method is applicable to an edge computing device, i.e., an MEC. As shown in FIG. 1, the task processing method of the embodiment includes the following operations 101 to 107.

At operation 101, receiving a task sent from a network device.

In this operation, the MEC receives a task sent from a network device, where the task may be a periodic task or an emergency real-time task. The task sent from the network device to the MEC includes a task type and a task content corresponding to the task type. The task content may include an operation object, an operation time, a task strength, a task complete or partial target, a computing network architecture used for task computing, various hyper-parameters used for task computing, and other parameters. The task type may include: key performance indicator (KPI) anomaly detection model training, radio frequency (RF) fingerprint database model training, or the like.

At operation 102, determining an assignment type of the task.

In this operation, the MEC determines an assignment type of the task. The assignment type includes task (general task), subtask, iterative task, and iterative subtask. After the assignment type matched with each task received by the MEC is determined, the received task is assigned as a task or subtask or iterative task or iterative subtask.

At operation 103, dividing the task into task units according to the assignment type, and placing the task units into a task pool.

In this operation, the MEC divides the task into (one or more) task units according to the assignment type, and the type of each task unit is the assignment type of the task to which the task unit belongs. That is, when the assignment type is task, the type of the task unit is task (task unit). When the assignment type is subtask, the task is divided into subtasks (subtask units), and the type of the task unit is subtask. The number of subtasks may be pre-configured by the MEC, and the task may be divided into subtasks according to a configured fixed number. When the assignment type is iterative task, the task is divided into iterative tasks (iterative task units), and the type of the task unit is iterative task, and the number of iterations may be fixed or variable. When the number of iterations is fixed, the iterative tasks are configured according to the fixed number; and when the number of iterative tasks is variable, merely one iterative task is divided out. When the assignment type is iterative subtask, the task is divided into iterative subtasks (iterative subtask units), the type of the task unit is iterative subtask, and the number of iterations may be fixed or variable. When the number of iterations is fixed, the iterative subtasks are configured according to the fixed number, and when the number of iterative tasks is variable, merely one iterative subtask is divided out. The task units divided from each task are placed into a task pool.

At operation 104, determining, according to types of the task units in the task pool, issuing priorities of the task units in the task pool.

In this operation, an issuing priority corresponding to each task unit in the task pool is determined, and all task units in the task pool are ranked, where a task unit ranked higher has a higher issuing priority, while a task unit ranked lower has a lower issuing priority. In addition, when the issuing priorities of the task units in the task pool are determined, the type of each task unit is desired to be considered.

It should be noted that the task units in the task pool are updated in real time, and the issuing priorities are also updated in real time. When a task unit is added into the task pool, all task units in the task pool are re-ranked, and the issuing priorities of the task units in the task pool are re-determined.

At operation 105, determining, according to the issuing priorities, a task unit to be processed.

In this operation, the MEC finds out a task unit with a highest issuing priority in the task pool, and takes that task unit as the task unit to be processed.

At operation 106, determining a first network element device if a current processing capacity of an edge computing device (i.e., the MEC) does not meet a preset first requirement.

In this operation, if the current processing capacity of the MEC does not meet the preset first requirement, that is, task consumed resources of the task unit to be processed exceed the current processing capacity of the MEC and an idle computing power resource of the MEC is insufficient, the task unit to be processed is desired to be subjected to task transfer, and a corresponding first network element device for the task transfer is determined.

If the current processing capacity of the MEC meets the preset first requirement, that is, the MEC can process the task to be processed, the task unit to be processed is processed by the MEC. The first network element device herein may be a network element device designated in advance, or may be any network element device.

At operation 107, sending the task unit to be processed to the first network element device for processing.

In this operation, the MEC sends the task unit to be processed to the first network element device, wherein the issued task unit includes a task type, an operation object, operation time, task strength, various hyper-parameters used for task computing, and other parameters corresponding to the task unit. The first network element device may find a suitable algorithm and an iterative function according to the parameters carried in the task unit, and process the task to be processed using data in a local detection sample database. After the first network element device completes processing of the task unit to be processed, a processing result is returned to the MEC. If the MEC receives the processing result, it is determined that processing the task unit to be processed is completed, and if the MEC does not receive the processing result, it is determined that processing the task unit to be processed is not completed.

For example, when the type of the task unit to be processed is subtask, the first network element device may execute the subtask based on a Gaussian detection algorithm. When the type of the task unit to be processed is iterative task and iterative subtask, the first network element device may execute the iterative task and iterative subtask based on a holt-windows algorithm.

In an optional implementation, the MEC is a central network element, and the first network element device is a computing network element. By default, the first network element device may be adapted to all algorithms. In other words, by default, all algorithms which may possibly be used are pre-stored in the first network element device. The MEC may encrypt and then issue the task unit to be processed, and the first network element device decrypts the task unit with a pre-agreed key.

According to the task processing method provided in the embodiments of the present disclosure, when the computing power resource of the edge computing device is insufficient, a current task is divided into a plurality of task units based on the federated learning idea, and a first network element device is selected from a peripheral network element group to process the task units, so as to implement transfer computation and share the computing power of the first network element device, which increases the computing power of the edge computing device while reducing the task computing delay. The embodiments of the present disclosure are particularly suitable for emergency real-time tasks, and can quickly transfer the emergency real-time tasks to other network element devices, thereby reducing the task computing delay.

In an optional implementation, the task contains a task type, and before determining the assignment type of the task, the task processing method further includes: configuring an algorithm for the task according to the task type of the task.

In this operation, the MEC configures the algorithm according to the task type of the task. In a scene involving iteration, an iterative function is further configured according to the algorithm. It should be noted here that there is no need to send the configured algorithm and iterative function to the network element, because the network element may find an algorithm and an iterative function matched with the received task unit to be processed in locally stored algorithms.

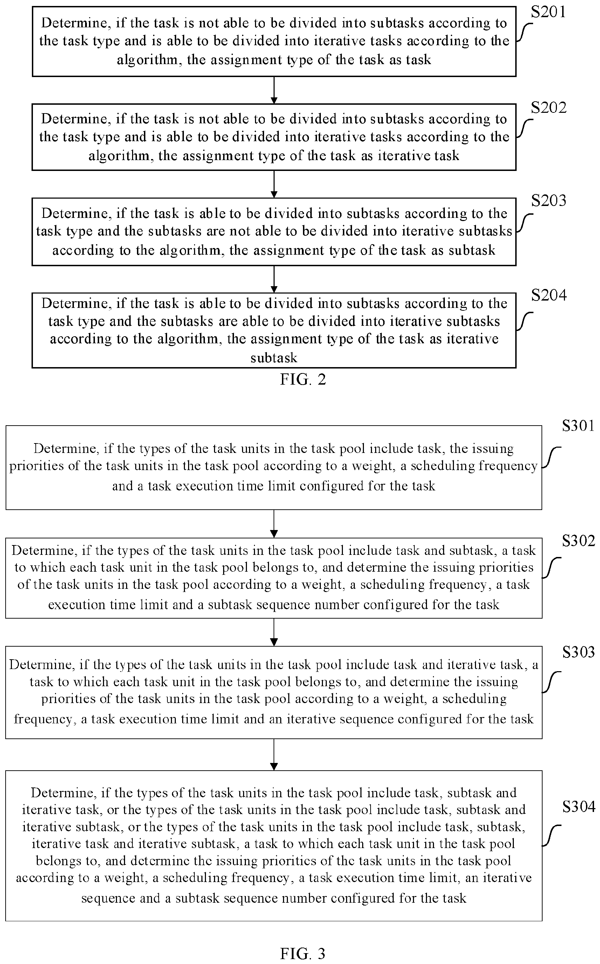

FIG. 2 shows another flowchart of a task processing method according to an embodiment of the present disclosure. As shown in FIG. 2, in some optional implementations, determining the assignment type of the task (i.e., the above operation 102) includes: the following operations 201 to 204.

At operation 201, determining, if the task is not able to be divided into subtasks according to the task type and the task is not able to be divided into iterative tasks according to the algorithm, the assignment type of the task as task.

At operation 202, determining, if the task is not able to be divided into subtasks according to the task type and the task is able to be divided into iterative tasks according to the algorithm, the assignment type of the task as iterative task.

At operation 203, determining, if the task is able to be divided into subtasks according to the task type and the subtasks are not able to be divided into iterative subtasks according to the algorithm, the assignment type of the task as subtask.

At operation 204, determining, if the task is able to be divided into subtasks according to the task type and the subtasks are able to be divided into iterative subtasks according to the algorithm, the assignment type of the task as iterative subtask.

In operations 201 to 204, the MEC determines whether the task is able to be divided into subtasks according to the task type, that is, determines whether the task is able to be divided into subtasks according to the task type and parameters such as the operation object and the operation time corresponding to the task type in the task. The MEC determines, according to a pre-configured algorithm matched with the task, whether the task is able to be divided into iterative tasks, and determines, according to the algorithm matched with the task, whether the subtasks are able to be divided into iterative subtasks. Therefore, four assignment types of the task are determined, including task, subtask, iterative task, and iterative subtask.

In an exemplary example, if the task type of the task is KPI anomaly detection model training, it is determined according to the task type that the task is able to be divided into subtasks, and the subtasks are able to be divided into iterative subtasks. In the KPI anomaly detection model training, if the anomaly detection model training is desired to be performed on 1000 cells, the subtasks may be divided according to 100 cells, and an iterative subtask with an iterative gradient and hyper-parameters can be divided from each subtask. At this time, the iteration processing result of each first network element device is a gradient, hyper-parameters, and model output data.

Further, FIG. 3 shows another flowchart of a task processing method according to an embodiment of the present disclosure. As shown in FIG. 3, in some optional implementations, determining, according to types of the task units in the task pool, issuing priorities of the task units in the task pool (i.e., the above operation 104) includes: the following operations 301 to 304.

At operation 301, determining, if the types of the task units in the task pool include task, the issuing priorities of the task units in the task pool according to a weight, a scheduling frequency and a task execution time limit configured for the task.

In some optional implementations, the MEC pre-configures the corresponding weight, scheduling frequency, and task execution time limit for each task, and configures the corresponding weight, scheduling frequency, and task execution time limit according to the task type. The scheduling frequency refers to a frequency of one task being scheduled within one cycle. The task execution time limit refers to a valid time limit for a task, within which the task should be completed. Generally, the task execution time limit is less than a scheduling period of the task. A task with a higher scheduling frequency is preferentially issued, a task with a higher weight is preferentially issued, and a task with a shorter task execution time limit is preferentially issued.

In some optional implementations, when the assignment type is iterative task and iterative subtask, it is determined in advance whether the number of iterations of the iterative task and the iterative subtask is fixed. If the number of iterations is fixed, the fixed value is configured, and when each task is divided into task units in advance, iterative tasks and iterative subtasks are divided according to the fixed number of iterations. If the number of iterations is variable, when each task is divided into task units in advance, merely one iterative task or iterative subtask is divided from the task. when the assignment type is iterative subtask and subtask, the number of subtasks is pre-configured, and when each task is divided into task units in advance, iterative subtasks and subtasks are divided according to the fixed number of subtasks.

In some optional implementations, if the types of the task units in the task pool include merely task in this operation, the tasks are firstly ranked according to the weight from high to low. Then, tasks with a same weight are ranked according to the scheduling frequency from high to low. Next, tasks with a same weight and a same scheduling frequency are ranked according to the task execution time limit from short to long. A task ranked higher has a higher issuing priority, while a task ranked lower has a lower issuing priority. When the tasks are ranked, the weight is firstly considered, then the scheduling frequency, and then the task execution time limit. This ranking method is defined as "task ranking method".

For example, there are four tasks in the task pool, the weight, the scheduling frequency and the task execution time limit corresponding to task 1 are 5, 2 and 3 respectively, the weight, the scheduling frequency and the task execution time limit corresponding to task 2 are 5, 6 and 3 respectively, the weight, the scheduling frequency and the task execution time limit corresponding to task 3 are 5, 2 and 4 respectively, and the weight, the scheduling frequency and the task execution time limit corresponding to task 4 are 10, 2 and 4 respectively. Therefore, the final ranking result is: task 4, task 2, task 1, and task 3.

At operation 302, determining, if the types of the task units in the task pool include task and subtask, a task to which each task unit in the task pool belongs, and determining the issuing priorities of the task units in the task pool according to a weight, a scheduling frequency, a task execution time limit and a subtask sequence number configured for the task.

In some optional implementations, if the types of the task units in the task pool include task and subtask in this operation, the tasks are firstly ranked according to the task ranking method, and then, subtasks under each task branch are ranked according to the subtask sequence number from small to large. A task unit ranked higher has a higher issuing priority, while a task unit ranked lower has a lower issuing priority.

At operation 303, determining, if the types of the task units in the task pool include task and iterative task, a task to which each task unit in the task pool belongs, and determining the issuing priorities of the task units in the task pool according to a weight, a scheduling frequency, a task execution time limit and an iterative sequence configured for the task.

In some optional implementations, if the types of the task units in the task pool include task and iterative task in this operation, the tasks are firstly ranked according to the task ranking method. Then, iterative tasks under each task branch are ranked according to the iterative sequence from large to small. A task unit ranked higher has a higher issuing priority, while a task unit ranked lower has a lower issuing priority.

At operation 304, determining, if the types of the task units in the task pool include task, subtask and iterative task, or the types of the task units in the task pool include task, subtask and iterative subtask, or the types of the task units in the task pool include task, subtask, iterative task and iterative subtask, a task to which each task unit in the task pool belongs, and determining the issuing priorities of the task units in the task pool according to a weight, a scheduling frequency, a task execution time limit, an iterative sequence and a subtask sequence number configured for the task.

In some optional implementations, if the types of the task units in the task pool include task, subtask and iterative task in this operation, the tasks are firstly ranked according to the task ranking method. Then, iterative tasks under each task branch are ranked according to the iterative sequence from large to small. Then, subtasks under each task branch are ranked according to the subtask sequence number from small to large. A task unit ranked higher has a higher issuing priority, while a task unit ranked lower has a lower issuing priority.

In some optional implementations, if the types of the task units in the task pool include task, subtask and iterative subtask in this operation, the tasks are firstly ranked according to the task ranking method. Then, subtasks under each task branch are ranked according to the subtask sequence number from small to large. Then, iterative subtasks under each task branch are ranked according to the iterative sequence from large to small and the subtask sequence number from small to large. A task unit ranked higher has a higher issuing priority, while a task unit ranked lower has a lower issuing priority.

For example, if a task is divided into two subtasks and a subtask is further divided into two iterative subtasks, the final ranking result is: subtask 1 iterated 2 times, subtask 2 iterated 2 times, subtask 1 iterated 1 time, and subtask 1 iterated 1 time. The issuing priorities are reduced in sequence.

In some optional implementations, determining, according to types of the task units in the task pool, issuing priorities of the task units in the task pool includes: respectively determining, if the task units in the task pool include multiple types, an issuing priority of each type of task unit, and determining, according to the issuing priority of each type of task unit, issuing priorities of the task units in the task pool.

The issuing priority of the task unit with the type of "task" is determined according to the weight, scheduling frequency and task execution time limit configured for the task to which the task unit belongs; the issuing priority of the task unit with the type of "subtask" is determined according to a subtask sequence number; the issuing priority of the task unit with the type of "iterative task" is determined according to an iterative sequence; and the issuing priority of the task unit with the type of "iterative subtask" is determined according to an iterative sequence of the iterative subtask and a subtask sequence number.

In this operation, the issuing priorities of the task units in the task pool are determined according to the issuing priority of each type of task unit. That is, the issuing priorities of the task units in the task pool are summarized from the issuing priorities of all types of task units. The specific summarization process may refer to the above description of operations 301 to 304. When the issuing priority of a task unit is determined, the weight, scheduling frequency and task execution time limit configured for the task to which the task unit belongs are firstly considered, then the number of iterations, and then the subtask sequence number.

In some optional implementations, the method further includes:
if the type of a task unit in the task pool is iterative task or iterative subtask, and the number of iterations is determined to be variable according to the algorithm, generating, when a processing result of a previous iteration returned from the first network element device is received, a next iterative task or a next iterative subtask if it is judged that the iteration is not completed according to the processing result, and placing the next iterative task or the next iterative subtask into the task pool.

In this operation, if the type of a task unit in the task pool is iterative task or iterative subtask, and the number of iterations is determined to be variable according to the algorithm, all the iterative tasks or iterative subtasks other than a first iterative task or a first iterative subtask are desired to be re-generated. The re-generated iterative tasks or iterative subtasks are placed into the task pool, the issuing priorities of all task units in the task pool are re-computed, and a re-generated iterative task or iterative subtask with a highest issuing priority is sent to the first network element device. When the MEC receives a certain processing result indicating that the iteration is completed returned from the first network element device, the generation of new iterative tasks or iterative subtasks is stopped.

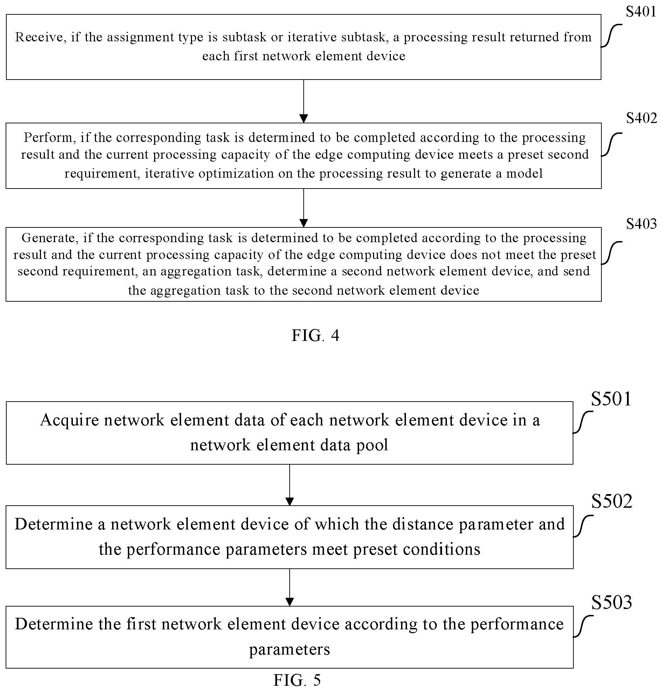

Further, FIG. 4 shows another flowchart of a task processing method according to an embodiment of the present disclosure. As shown in FIG. 4, in some optional implementations, the method further includes the following operations 401 to 403.

At operation 401, receiving, if the assignment type is subtask or iterative subtask, a processing result returned from each first network element device.

At operation 402, performing, if the corresponding task is determined to be completed according to the processing result and the current processing capacity of the edge computing device meets a preset second requirement, iterative optimization on the processing result, to generate a model.

At operation 403, generating, if the corresponding task is determined to be completed according to the processing result and the current processing capacity of the edge computing device does not meet the preset second requirement, an aggregation task, determining a second network element device, and sending the aggregation task to the second network element device.

In some optional implementations, in operations 401 to 403, if the assignment type is subtask or iterative subtask, processing results returned from all first network element devices are aggregated. If the current processing capacity of the MEC meets the preset second requirement, that is, the MEC has sufficient computing power to process the aggregation task, iterative optimization is performed on the processing results returned from the first network element devices to generate a model. If the current processing capacity of the MEC does not meet the preset second requirement, that is, the MEC does not have sufficient computing power to process the aggregation task, an aggregation task is generated, a second network element device is determined, and the aggregation task is sent to the second network element device.

It should be noted that the aggregation task here is not desired to be divided anymore. The second network element device may be a designated network element device, or may be any network element device. The aggregation process may involve various algorithms, which are not limited here.

For example, the iteration processing result of each first network element device is output data regarding a gradient, hyper-parameters, and model. Then a result output from the completed aggregation task is a gradient and hyper-parameter.

Further, FIG. 5 shows another flowchart of a task processing method according to an embodiment of the present disclosure. As shown in FIG. 5, in some optional implementations, determining the first network element device (i.e., the above operation 106) includes: the following operations 501 to 503.

At operation 501, acquiring network element data of each network element device in a network element data pool.

In some optional implementations, the network element data includes a distance parameter and performance parameters. The performance parameters are parameters indicating a load bearing capacity of the network element. A network element data pool is pre-established in the MEC, and the MEC periodically acquires network element data of each connected network element and stores the network element data in the network element data pool. The data in the network element data pool is updated in real time. It should be noted that the acquisition period of the network element data is not consistent with the issuing period of the task unit to be processed, and the acquisition process of the network element data is independent of the issuing process of the task unit to be processed.

At operation 502, determining a network element device of which the distance parameter and the performance parameters meet preset conditions.

At operation 503, determining the first network element device according to the performance parameters.

In other words, a network element set may be firstly determined according to the distance parameter and the performance parameters, and then the first network element device is determined from network element devices meeting the preset conditions according to the performance parameters. The first network element device is a network element device with a best computing power determined by the MEC in the current period.

In some optional implementations, the performance parameters include: a central processing unit (CPU) free space ratio, a memory (MEM) free space ratio, a magnetic disk (DISK) free space ratio, and a cache (CACHE) free space ratio. The distance parameter and the performance parameters meeting the preset conditions includes: a network element device in which the distance parameter is less than or equal to a first threshold, the CPU free space ratio is greater than a second threshold, the MEM free space ratio is greater than a third threshold, the DISK free space ratio is greater than a fourth threshold, and the CACHE free space ratio is greater than a fifth threshold.

It should be noted that, when a first network element device for receiving the task unit to be processed is designated, a network element closer to the MEC and with a larger CPU free space ratio, a larger MEM free space ratio, a larger DISK free space ratio, and a larger CACHE free space ratio is considered. In other words, a network element closer to the MEC and having a better computing power is considered. It is also desired to ensure that the selected network element device is online.

In some optional implementations, determining the first network element device according to the performance parameters includes: ranking network element devices in sequence according to the CPU free space ratio, the MEM free space ratio, the DISK free space ratio and the CACHE free space ratio; and determining the first network element device according to the sequence.

In the above operations, the network element devices are firstly ranked according to the CPU free space ratio from large to small. Then network element devices with a same CPU free space ratio are ranked according to the MEM free space ratio from large to small. Then network element devices with a same CPU free space ratio and a same MEM free space ratio are ranked according to the DISK free space ratio from large to small. Then network element devices with a same CPU free space ratio, a same MEM free space ratio, and a same DISK free space ratio are ranked according to the CACHE free space ratio from large to small. A task ranked higher has a higher issuing priority, while a task ranked lower has a lower issuing priority. The first network element device is a first network element device in the sequence. In other words, the first network element device is a network element device with the best computing power in the sequence.

In the embodiments of the present disclosure, when the computing power resource of the MEC is insufficient, a first network element device with sufficient computing power is selected from a peripheral network element group based on the federated learning idea to perform task transfer computation and share the computing power of the network element device, which increases the edge computing capacity of the MEC while reducing the task computing delay.

In some optional implementations, after sending the task unit to be processed to the first network element device (operation 107), the method further includes:
determining a third network element device if a task interruption message returned from the first network element device is received and the current processing capacity of the edge computing device does not meet a preset third requirement, so that the third network element device processes a task unit corresponding to the task interruption message.

In this operation, if the MEC receives a task interruption message returned from the first network element device and the current processing capacity of the MEC does not meet a preset third requirement, that is, the computing power of the MEC is not sufficient to process the task unit corresponding to the task interruption message, a third network element device is re-determined so that the third network element device processes a task unit corresponding to the task interruption message.

In an optional implementation, the third network element device may also receive and process a part of a task that is not completed in the task unit corresponding to the task interruption message.

In an embodiment of the present disclosure, when task processing interruption occurs in the first network element device, the task may be quickly transferred to another first network element device, and the task computing can be finally completed after a limited number of task transfers.

In some optional implementations, after sending the task unit to be processed to the first network element device (operation 107), the method further includes:
determining another first network element device if a processing result returned from the first network element device is not received within a preset time limit, and sending the task unit to be processed to the another first network element device.

After the assignment type of each task is determined and the task is divided into task units according to the assignment type, a preset time limit, i.e., an execution time limit, is assigned to each task unit. If the processing result returned from the first network element device is not received within the preset time limit, which indicates that the first network element device does not complete the task within the preset time limit, another first network element device is determined, and the task unit to be processed is sent to the another first network element device.

In an embodiment of the present disclosure, especially in the case of an emergency real-time task, when the computing power resource of the MEC is insufficient, another first network element device with sufficient computing power is rapidly selected from a peripheral network element group based on the federated learning idea to perform task transfer computation, which increases the edge computing capacity of the MEC while reducing the task computing delay.

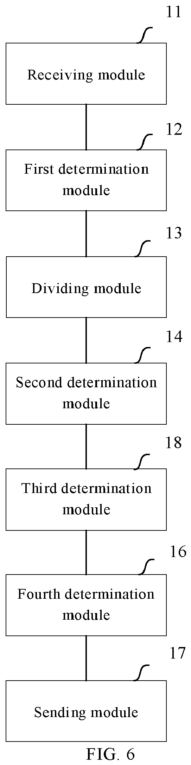

FIG. 6 shows a schematic structural diagram of an edge computing device according to an embodiment of the present disclosure. Based on a same technical concept as the embodiment corresponding to FIG. 1, as shown in FIG. 6, the edge computing device provided in the embodiment of the present disclosure includes the following modules 11 to 17.

A receiving module 11 is configured to receive a task sent from a network device.

A first determination module 12 is configured to determine an assignment type of the task.

A dividing module 13 is configured to divide the task into task units according to the assignment type, and place the task units into a task pool.

A second determination module 14 is configured to determine, according to types of the task units in the task pool, issuing priorities of the task units in the task pool. The type of each task unit is the assignment type of the task to which the task unit belongs.

A third determination module 15 is configured to determine, according to the issuing priorities, a task unit to be processed.

A fourth determination module 16 is configured to determine a first network element device if the third determination module 15 determines that a current processing capacity of an edge computing device does not meet a preset first requirement.

A sending module 17 is configured to send the task unit to be processed to the first network element device for processing.

In some optional implementations, the assignment type includes task, subtask, iterative task, and iterative subtask.

In some optional implementations, the task contains a task type, and before determining the assignment type of the task, an algorithm is configured for the task according to the task type of the task.

In some optional implementations, the first determination module 12 is configured to: determine, if the task is not able to be divided into subtasks according to the task type and the task is not able to be divided into iterative tasks according to the algorithm, the assignment type of the task as task; determine, if the task is not able to be divided into subtasks according to the task type and the task is able to be divided into iterative tasks according to the algorithm, the assignment type of the task as iterative task; determine, if the task is able to be divided into subtasks according to the task type and the subtasks are not able to be divided into iterative subtasks according to the algorithm, the assignment type of the task as subtask; and determine, if the task is able to be divided into subtasks according to the task type and the subtasks are able to be divided into iterative subtasks according to the algorithm, the assignment type of the task as iterative subtask.

In some optional implementations, the second determination module 14 is configured to: determine, if the types of the task units in the task pool include task, the issuing priorities of the task units in the task pool according to a weight, a scheduling frequency and a task execution time limit configured for the task; determine, if the types of the task units in the task pool include task and subtask, a task to which each task unit in the task pool belongs, and determine the issuing priorities of the task units in the task pool according to a weight, a scheduling frequency, a task execution time limit and a subtask sequence number configured for the task; determine, if the types of the task units in the task pool include task and iterative task, a task to which each task unit in the task pool belongs, and determine the issuing priorities of the task units in the task pool according to a weight, a scheduling frequency, a task execution time limit and an iterative sequence configured for the task; determine, if the types of the task units in the task pool include task, subtask and iterative task, or the types of the task units in the task pool include task, subtask and iterative subtask, or the types of the task units in the task pool include task, subtask, iterative task and iterative subtask, a task to which each task unit in the task pool belongs, and determine the issuing priorities of the task units in the task pool according to a weight, a scheduling frequency, a task execution time limit, an iterative sequence and a subtask sequence number configured for the task.

In some optional implementations, the second determination module 14 is configured to: determine, if the task units in the task pool include multiple types, an issuing priority of each type of task unit, respectively, and determine, according to the issuing priority of each type of task unit, the issuing priorities of the task units in the task pool.

The issuing priority of the task unit with the type of "task" is determined according to the weight, scheduling frequency and task execution time limit configured for the task to which the task unit belongs; the issuing priority of the task unit with the type of "subtask" is determined according to a subtask sequence number; the issuing priority of the task unit with the type of "iterative task" is determined according to an iterative sequence; and the issuing priority of the task unit with the type of "iterative subtask" is determined according to an iterative sequence and a subtask sequence number.

In some optional implementations, the edge computing device further includes a first generation module and a storage module.

The first generation module is configured to: if the type of a task unit in the task pool is iterative task or iterative subtask, and the number of iterations is determined to be variable according to the algorithm, generating, when a processing result of a previous iteration returned from the first network element device is received, a next iterative task or a next iterative subtask if it is judged that the iteration is not completed according to the processing result.

The storage module is configured to place the next iterative task or the next iterative subtask into the task pool.

In some optional implementations, the receiving module 11 is further configured to: receive, if the assignment type is subtask or iterative subtask, a processing result returned from each first network element device.

The edge computing device further includes a second generation module configured to: perform, if a corresponding task is determined to be completed according to the processing result and the current processing capacity of the edge computing device meets a preset second requirement, iterative optimization on the processing result to generate a model.

The sending module 17 is further configured to: generate, if the corresponding task is determined to be completed according to the processing result and the current processing capacity of the edge computing device does not meet the preset second requirement, an aggregation task, determine a second network element device, and send the aggregation task to the second network element device.

In some optional implementations, the fourth determination module 16 is configured to: acquire network element data of each network element device in a network element data pool, where the network element data includes a distance parameter and performance parameters; determine a network element device of which the distance parameter and the performance parameters meet preset conditions; and determine the first network element device according to the performance parameters.

In some optional implementations, the performance parameters include: a central processing unit (CPU) free space ratio, a memory (MEM) free space ratio, a magnetic disk (DISK) free space ratio, and a cache (CACHE) free space ratio.

In some optional implementations, the distance parameter and the performance parameters meeting the preset conditions includes: a network element device in which the distance parameter is less than or equal to a first threshold, the CPU free space ratio is greater than a second threshold, the MEM free space ratio is greater than a third threshold, the DISK free space ratio is greater than a fourth threshold, and the CACHE free space ratio is greater than a fifth threshold.

In some optional implementations, the fourth determination module 16 is configured to: rank network element devices in sequence according to the CPU free space ratio, the MEM free space ratio, the DISK free space ratio and the CACHE free space ratio; and determine the first network element device according to the sequence.

In some optional implementations, the edge computing device further includes a fifth determination module configured to: determine a third network element device if a task interruption message returned from the first network element device is received and the current processing capacity of the edge computing device does not meet a preset third requirement, so that the third network element device processes a task unit corresponding to the task interruption message.

In some embodiments, the edge computing device further includes a sixth determination module configured to: determine another first network element device if a processing result returned from the first network element device is not received within a preset time limit, and send the task unit to be processed to the another first network element device.

An embodiment of the present disclosure further provides a computer device, including: one or more processors and a storage means. The storage means stores one or more programs thereon which, when executed by the one or more processors, cause the one or more processors to implement the task processing method as described in any of the above embodiments.

An embodiment of the present disclosure further provides a computer-readable medium storing a computer program thereon, where the computer program, when executed, causes the task processing method as described in any of the above embodiments to be implemented.

Those of ordinary skill in the art will appreciate that all or some operations of the above-described method, functional modules/units in the apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disc (DVD) or any other optical disc storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A task processing method, comprising:
receiving a task sent from a network device;
determining an assignment type of the task, dividing the task into task units according to the assignment type, and placing the task units into a task pool;
determining, according to types of the task units in the task pool, issuing priorities of the task units in the task pool, wherein the type of each task unit is the assignment type of the task to which the task unit belongs;
determining, according to the issuing priorities, a task unit to be processed; and
determining a first network element device if a current processing capacity of an edge computing device does not meet a preset first requirement, and sending the task unit to be processed to the first network element device for processing.

2. The method according to claim 1, wherein the assignment type comprises task, subtask, iterative task, and iterative subtask.

3. The method according to claim 2, wherein the task contains a task type, and before determining the assignment type of the task, the method further comprises: configuring an algorithm for the task according to the task type of the task;
determining the assignment type of the task comprises:
determining, if the task is not able to be divided into subtasks according to the task type and the task is not able to be divided into iterative tasks according to the algorithm, the assignment type of the task as task;
determining, if the task is not able to be divided into subtasks according to the task type and the task is able to be divided into iterative tasks according to the algorithm, the assignment type of the task as iterative task;
determining, if the task is able to be divided into subtasks according to the task type and the subtasks are not able to be divided into iterative subtasks according to the algorithm, the assignment type of the task as subtask; and
determining, if the task is able to be divided into subtasks according to the task type and the subtasks are able to be divided into iterative subtasks according to the algorithm, the assignment type of the task as iterative subtask.

4. The method according to claim 2, wherein determining, according to types of the task units in the task pool, issuing priorities of the task units in the task pool comprises:
determining, if the types of the task units in the task pool comprise task, the issuing priorities of the task units in the task pool according to a weight, a scheduling frequency and a task execution time limit configured for the task;
determining, if the types of the task units in the task pool comprise task and subtask, a task to which each task unit in the task pool belongs, and determining the issuing priorities of the task units in the task pool according to a weight, a scheduling frequency, a task execution time limit and a subtask sequence number configured for the task;
determining, if the types of the task units in the task pool comprise task and iterative task, a task to which each task unit in the task pool belongs, and determining the issuing priorities of the task units in the task pool according to a weight, a scheduling frequency, a task execution time limit and an iterative sequence configured for the task;
determining, if the types of the task units in the task pool comprise task, subtask and iterative task, or the types of the task units in the task pool comprise task, subtask and iterative subtask, or the types of the task units in the task pool comprise task, subtask, iterative task and iterative subtask, a task to which each task unit in the task pool belongs, and determining the issuing priorities of the task units in the task pool according to a weight, a scheduling frequency, a task execution time limit, an iterative sequence and a subtask sequence number configured for the task.

5. The method according to claim 4, wherein determining, according to types of the task units in the task pool, issuing priorities of the task units in the task pool comprises:
determining, if the task units in the task pool comprise multiple types, an issuing priority of each type of task unit, respectively, and determining, according to the issuing priority of each type of task unit, the issuing priorities of the task units in the task pool;
wherein the issuing priority of the task unit with the type of "task" is determined according to the weight, scheduling frequency and task execution time limit configured for the task to which the task unit belongs; the issuing priority of the task unit with the type of "subtask" is determined according to a subtask sequence number; the issuing priority of the task unit with the type of "iterative task" of the task unit with the type of "iterative task" is determined according to an iterative sequence; and the issuing priority of the task unit with the type of "iterative subtask" is determined according to an iterative sequence and a subtask sequence number.

6. The method according to claim 2, wherein the method further comprises:
if the type of the task unit in the task pool is iterative task or iterative subtask and the number of iterations is determined to be variable according to the algorithm, generating, when a processing result of a previous iteration returned from the first network element device is received, a next iterative task or a next iterative subtask if it is judged that the iteration is not completed according to the processing result, and placing the next iterative task or the next iterative subtask into the task pool.

7. The method according to claim 2, wherein the method further comprises:
receiving, if the assignment type is subtask or iterative subtask, a processing result returned from each first network element device;
performing, if a corresponding task is determined to be completed according to the processing result and the current processing capacity of the edge computing device meets a preset second requirement, iterative optimization on the processing result to generate a model; and
generating, if the corresponding task is determined to be completed according to the processing result and the current processing capacity of the edge computing device does not meet the preset second requirement, an aggregation task, determining a second network element device, and sending the aggregation task to the second network element device.

8. The method according to claim 1, wherein determining the first network element device comprises:
acquiring network element data of each network element device in a network element data pool, wherein the network element data comprises a distance parameter and performance parameters;
determining a network element device of which the distance parameter and the performance parameters meet preset conditions; and
determining the first network element device according to the performance parameters.

9. The method according to claim 8, wherein the performance parameters comprise: a central processing unit (CPU) free space ratio, a memory (MEM) free space ratio, a magnetic disk (DISK) free space ratio, and a cache (CACHE) free space ratio;
the distance parameter and the performance parameters meeting the preset conditions comprises: a network element device in which the distance parameter is less than or equal to a first threshold, the CPU free space ratio is greater than a second threshold, the MEM free space ratio is greater than a third threshold, the DISK free space ratio is greater than a fourth threshold, and the CACHE free space ratio is greater than a fifth threshold; and
determining the first network element device according to the performance parameters comprises:
ranking network element devices in sequence according to the CPU free space ratio, the MEM free space ratio, the DISK free space ratio and the CACHE free space ratio; and
determining the first network element device according to the sequence.

10. The method according to any one of claims 1 to 9, wherein after sending the task unit to be processed to the first network element device, the method further comprises:
determining a third network element device if a task interruption message returned from the first network element device is received and the current processing capacity of the edge computing device does not meet a preset third requirement, such that the third network element device processes a task unit corresponding to the task interruption message.

11. The method according to claim 1, wherein after sending the task unit to be processed to the first network element device, the method further comprises:
determining another first network element device if a processing result returned from the first network element device is not received within a preset time limit, and sending the task unit to be processed to the another first network element device.

12. The method according to any one of claims 1 to 11, wherein
the method is implemented by the edge computing device; and
if the current processing capacity of the edge computing device meets the preset first requirement, the edge computing device processes the task unit to be processed.

13. An edge computing device, comprising:
a receiving module configured to receive a task sent from a network device;
a first determination module configured to determine an assignment type of the task;
a dividing module configured to divide the task into task units according to the assignment type, and place the task units into a task pool;
a second determination module configured to determine, according to types of the task units in the task pool, issuing priorities of the task units in the task pool, wherein the type of each task unit is the assignment type of the task to which the task unit belongs;
a third determination module configured to determine, according to the issuing priorities, a task unit to be processed;
a fourth determination module configured to determine a first network element device if a current processing capacity of an edge computing device does not meet a preset first requirement; and
a sending module configured to send the task unit to be processed to the first network element device for processing.

14. A computer device, comprising:
at least one processor;
a storage means having at least one program stored thereon, wherein
the at least one program, when executed by the at least one processor, cause the at least one processor to implement the task processing method according to any one of claims 1 to 12.

15. A computer-readable medium storing a computer program thereon, wherein the program, when executed, causes the task processing method according to any one of claims 1 to 12 to be implemented.
